# EUROPÄISCHE PATENTSCHRIFT

(11) **EP 3 452 259 B1**
(45) Veröffentlichungstag und Bekanntmachung des Hinweises auf die Patenterteilung: **11.03.2020**
(21) Anmeldenummer: 17767994.1
(22) Anmeldetag: 02.08.2017
(51) Int. Cl.: B27K 3/02, B27K 3/10

(54) **HOLZBEHANDLUNGSVORRICHTUNG MIT VERSCHIEBBARER HÜLSE ZUR BEHANDLUNG VON HOLZ UND VERFAHREN ZUR HOLZBEHANDLUNG**
WOOD-TREATMENT APPARATUS WITH A DISPLACEABLE SLEEVE FOR TREATING WOOD, AND METHOD FOR TREATING WOOD
DISPOSITIF DE TRAITEMENT DU BOIS À MANCHON MOBILE POUR LE TRAITEMENT DU BOIS ET PROCÉDÉ DE TRAITEMENT DU BOIS

(30) Priorität: 18.08.2016 DE 102016009909
(43) Veröffentlichungstag der Anmeldung: 13.03.2019
(73) Patentinhaber: IML Instrumenta Mechanik Labor GmbH, 69168 Wiesloch (DE)
(72) Erfinder: HUNGER, Erich, 76133 Karlsruhe (DE); HUNGER, Sebastian, 69181 Leimen (DE); HUNGER, Fabian, 69181 Leimen (DE)
(74) Vertreter: Mehl-Mikus, Claudia
(86) Internationale Anmeldenummer: PCT/EP2017/000932
(87) Internationale Veröffentlichungsnummer: WO 2018/033233

(56) Entgegenhaltungen:
- FR-A1- 2 259 534
- FR-A1- 2 260 430
- SE-B- 356 921
- US-A- 1 999 458
- US-A- 3 706 161

## Beschreibung

Die Erfindung betrifft eine Holzbehandlungsvorrichtung zur Behandlung von Holz und ein Verfahren zur Behandlung des Holzes.

Aus dem Stand der Technik ist bekannt, dass Holzmasten, Baumstämme und andere Holzobjekte von Zeit zu Zeit einer Prüfung unterzogen werden, bei der der Zustand des vorhandenen Holzes, dessen Imprägnierung und/oder weitere für die Standfestigkeit und Tragfähigkeit maßgebliche Eigenschaften untersucht werden. Dabei ist die Untersuchung auf Fäule im Inneren eine wichtige Untersuchung hinsichtlich der Standfestigkeit. Weitere Untersuchungen werden mittels Bohrwiderstandsmessungen durchgeführt.

Aus der DE 10 2014 015 051 B3 ist ein Holzprüfwerkzeug und ein Verfahren bekannt, das eine Untersuchung der Tränktiefe von imprägniertem Holz ermöglicht, indem das Holzprüfwerkzeug in das Holz eingetrieben und damit eine Holzprobe ausgestanzt wird, die einer Sichtprüfung unterzogen werden kann.

Durch derartige Untersuchungen wird ermittelt, in wieweit das Holz geschädigt ist und ob das verbleibende gesunde Holz für die Standfestigkeit ausreichend ist. Sobald das Holz zu stark geschädigt ist, muss der Mast ersetzt oder der Baum gefällt werden. Eine Behandlung des Holzes ist bisher kaum möglich.

Weiter ist aus dem Stand der Technik bekannt, dass zur Tiefenbehandlung von Holz mittels einer Vorrichtung Imprägnierflüssigkeit unter hohem Druck in das Holz geleitet wird. Eine solche Vorrichtung ist beispielsweise aus der DE 2 021 647 U bekannt. Diese Imprägnierung ist vorbeugend durchzuführen und durch die Notwendigkeit von hohen Drücken sehr aufwändig.

Solche Hochdruckvorrichtungen verwenden in der Regel Einschraubdüsen, die in das Holz eingeschraubt werden, um das Zurückschlagen der Düse bei der Hochdruckapplikation zu verhindern. Diese Einschraubdüsen werden mit einem Druckbehälter zur Bereitstellung der Impfflüssigkeit unter Hochdruck verbunden. Um den Druckbehälter auch dann unter Druck setzen zu können, wenn die Einschraubdüse nicht im Holz gesichert ist, beschreiben DE 926 160 B und DE 926 161 B einen Ventilkolben, der im Inneren einer solchen Einschraubdüse gelagert ist und durch eine an der Außenseite der Düse geführte, axial verschiebbare Hülse betätigt werden kann, die sich beim Einschrauben der Düse in das Holz gegen die Holzoberfläche abstützt und dabei das Ventil öffnet, indem der Ventilkolben aus dem Ventilsitz gehoben wird.

DE 20 21 647 A offenbart eine Einspritzvorrichtung für die Tiefenbehandlung von Holz, die im Holz verbleibt, um zu verhindern, dass die Schutzflüssigkeit beim Einspritzen mit hohem Druck in das Holz nach außen zurückfließt. Diese Einspritzvorrichtung weist einen zylindrischen Hohlkörper auf, an dessen einem Ende, das aus dem Holzstück herausragt, ein Kopf mit einer Durchtrittsöffnung ausgebildet ist, um dort eine Einspritzvorrichtung anzuschließen, die eine Holzschutzflüssigkeit unter hohem Druck von 50 bis 100 bar bereitstellt. Ferner weist der zylindrische Hohlkörper im Kopf eine auf radial nach innen kragenden Rippen gelagerte Kugel auf, die die Durchtrittsöffnung verschließt, wenn sie durch rückströmende Flüssigkeit dagegen gedrückt wird, und so ein Rückfließen der mit Hochdruck injizierten Flüssigkeit nach außen unterbunden wird.

Darüber hinaus sind Fungizide bekannt, die selbst Pilze enthalten, und zur Bekämpfung von Fäulnis bei befallenem Holz oder zur Vorbeugung eingesetzt werden. Ein solches Fungizid ist beispielsweise aus WO 93/08694 bekannt.

Ferner sind Vorrichtungen aus dem Stand der Technik bekannt, die zum Einschlagen in Holz oder Einbringen in Bohrungen in dem Holz und zum Verbleib dort vorgesehen sind, bei denen ein Holzbehandlungswirkstoff druckfrei aus den Öffnungen einer hohlzylindrischen Kapsel in das umgebende Holz übergeht.

In FR 2 260 430 A1 wird ein nagelförmiger Hohlkörper ins Holz eingebracht. Durch Aufschrauben eines Behälters wird Lösungsmittel eingebracht, mit dem das als Feststoff im Hohlkörper vorliegende Holzschutzmittel durchtränkt wird. Das in dem Lösungsmittel gelöste Holzschutzmittel kann dann durch seitliche Öffnungen im Hohlkörper ausströmen.

FR 2 259 534 A1 beschreibt einen nagelförmigen Hohlkörper, in dem das Holzschutzmittel in einer Plastikblase vorliegt. Diese wird durch von außen auszuübenden Druck zum Platzen gebracht, um das enthaltene Holzschutzmittel durch seitliche Öffnungen im Hohlkörper austreten zu lassen.

In ähnlicher Weise beschreibt SE 356 921 B einen Hohlnagel, in dem ein Holzschutzmittel in Form von Ampullen vorliegt, die nach Einbringen ins Holz mit einer Nadel durchstochen werden, um das Holzschutzmittel freizusetzen und durch seitliche Öffnungen austreten zu lassen.

US 3 706 161 A und US 1 999 458 A beschreiben kegelstumpfförmige Hohlkörper zum Einbringen in Bohrungen im Holz, bei denen die seitlichen Austrittsöffnungen durch ein lösbares Material bzw. durch einen Filmüberzug verschlossen sind. Das lösbare Material soll durch den Baumsaft nach dem Einbringen in die Bohrung aufgelöst werden, um das enthaltene Holzschutzmittel freizusetzen. Der Filmüberzug soll beim Einführen in die Bohrung an der Bohrungswand abgerieben werden, um die Austrittsöffnungen freizulegen und das enthaltene Holzschutzmittel austreten zu lassen. In beiden Fällen ist das Öffnen der Austrittöffnungen damit nicht verlässlich sichergestellt, da es in einem Fall von der Menge und der Verteilung des austretenden Baumsafts abhängig ist und in dem anderen Fall von der Präzision bei der Schaffung der Bohrung, deren Durchmesser zum Abreiben des Filmüberzugs geeignet sein muss, und von der Geschicklichkeit beim Einführen des Hohlkörpers, um den Filmüberzug gleichmäßig abzureiben. Aber auch dann ist durch den Anwender nicht erkennbar, ob, wann und wie weit die Öffnungen im Hohlkörper freigelegt wurden, um das Holzschutzmittel austreten zu lassen.

Ausgehend von diesem Stand der Technik ist es Aufgabe der vorliegenden Erfindung, eine Vorrichtung bereitzustellen, mit der eine Behandlung von Holz, in dem Fäulnis erkannt wurde, auf einfache Weise ermöglicht wird.

Diese Aufgabe wird durch eine Holzbehandlungsvorrichtung mit den Merkmalen des Anspruchs 1 gelöst.

Die weitere Aufgabe, ein Verfahren zur Behandlung von mit Fäulnis befallenem Holz bereitzustellen, wird durch das Verfahren mit den Merkmalen des unabhängigen Anspruchs 9 gelöst.

Weiterbildungen der Vorrichtung und des Verfahrens sind in den Unteransprüchen ausgeführt.

In einer ersten Ausführungsform der erfindungsgemäßen Holzbehandlungsvorrichtung zur Behandlung von Holz weist diese einen zylindrischen Hohlkörper mit einem Innenende, das bei der Anwendung innerhalb des Holzes zu liegen kommt, und mit einem von dem Innenende abgewandten Außenende auf. Der zylindrische Hohlkörper hat ferner eine oder mehrere Austrittsöffnungen an der Mantelfläche des zylindrischen Hohlkörpers und weist einen Aufnahmeraum auf, in dem ein Trägermaterial mit Holzbehandlungswirkstoff vorliegt. Erfindungsgemäß umfasst die Holzbehandlungsvorrichtung weiter eine Hülse, die um den zylindrischen Hohlkörper verschiebbar oder zusammenschiebbar anliegt, sodass beim Einschieben oder Einschlagen der Holzbehandlungsvorrichtung in das Holz die Hülse entlang des zylindrischen Hohlkörpers zum Außenende hin verschoben oder zusammengeschoben vom umliegenden Holz zurückgehalten wird. Dabei verschließt die Hülse die Austrittsöffnung oder die mehreren Austrittsöffnungen in einem Nichtanwendungszustand der Holzbehandlungsvorrichtung und in einem Anwendungszustand der Holzbehandlungsvorrichtung, in dem die Austrittsöffnung(en) in der Mantelfläche des zylindrischen Hohlkörpers durch die zum Außenende hin verschobene oder zusammengeschobene Hülse vom Innenende her freigegeben in oder nahe an zu behandelnden Stellen des Holzes anordenbar ist/sind, freigibt und den Aufnahmeraum mit dem Holz in Kontakt bringt.

Dabei ist "die Behandlung von Holz" als das Behandeln von Holzmasten oder anderen Holzobjekten, aber auch in lebendem Holz an Baumstämmen oder Ästen gemeint. "In Kontakt bringen" des Aufnahmeraumes mit dem Holz meint, dass zwischen Holz und Aufnahmeraum in dem Hohlkörper über die Austrittsöffnungen eine offene Verbindung entsteht, so dass das Holzbehandlungsmittel über die Austrittsöffnungen austreten und in das Holz gelangen kann.

Mit "Nichtanwendungszustand" ist dabei der Zustand vor einer Anwendung gemeint, in dem der Aufnahmeraum mit dem Trägermaterial mitsamt Holzbehandlungswirkstoff gefüllt und durch die Hülse verschlossen vorliegt, und mit "Anwendungszustand" der Zustand, in dem die Holzbehandlungsvorrichtung in das Holz eingebracht wird, wobei die Hülse wenigstens eine Austrittsöffnung freigibt.

Das Verfahren zur Behandlung sieht vor, die Holzbehandlungsvorrichtung zur Anwendung in das Holz einzuschieben oder einzuschlagen und dabei die Hülse zurückzuschieben, oder hinsichtlich ihrer Länge so zu komprimieren, dass die Austrittsöffnung oder - öffnungen in oder nahe an den zu behandelnden Stellen zu liegen kommen. Durch das Wegschieben der Hülse werden die Austrittsöffnung(en) frei gegeben. Der Aufnahmeraum wird so mit dem umliegenden Holz in Kontakt gebracht.

Mit direktem oder auch indirektem Kontakt des Trägermaterials mit dem Holz kann sich der Holzbehandlungswirkstoff vom Trägermaterial aus ausbreiten und auf das Holz übergehen.

Je nachdem, ob es sich bei dem Trägermaterial um ein Liquid, das mit dem Holzbehandlungswirkstoff durch die Austrittsöffnung austreten kann, oder um einen Absorber handelt, der in dem Aufnahmeraum verbleibt und die Verteilung des Holzbehandlungswirkstoffs zulässt, oder aber, ob das Trägermaterial mit dem Holzbehandlungswirkstoff ein pulverförmiger oder körniger Feststoff oder ein Fluid, bevorzugt ein Fluid mit einer mindestens honigartigen Viskosität ab etwa 10⁴ mPa s, ist, verläuft die Ausbreitung des Holzbehandlungswirkstoffes anders. Auch aus einem Pulver oder körnigen Wirkstoff kann Holzbehandlungswirkstoff abgeschieden werden oder austreten und entsprechend, auch abhängig von der Witterung und anderen Bedingungen, aus der Vorrichtung in das Holz übertreten.

Der zylindrische Hohlkörper verbleibt in dem Holz, so dass sich der Holzbehandlungswirkstoff über einen längeren Zeitraum ausbreiten kann und nicht durch hohen Druck in die gewünschten Bereiche gepresst werden muss.

Das heißt insbesondere, dass die Hülse der erfindungsgemäßen Vorrichtung nicht wie im Stand der Technik mit einem Ventilkolben verbunden ist - denn auf einen solchen kann die erfindungsgemäße Vorrichtung verzichten - sondern dient lediglich dazu, gezielt die eine oder mehrere Austrittsöffnung(en) zu öffnen bzw. frei zu geben, und es bedeutet weiter, dass die Vorrichtung so ausgestaltet ist, dass eine in dem Aufnahmeraum der Holzbehandlungsvorrichtung befindliche Substanz lediglich durch Freigeben der Öffnungen in das Holz übertritt. Dabei ist "Übertreten" als druckloses Übergehen zu verstehen. Da die Holzbehandlungsvorrichtung im Holz verbleibt, wird dadurch zugelassen, dass die Trägersubstanz bzw. der Holzbehandlungswirkstoff ausschließlich durch Effekte wie Kapillarwirkung und/oder Diffusion in das Holz übergeht. Anders als bei herkömmlichen Einspritzvorrichtungen, bei denen der Holzbehandlungswirkstoff unter Hochdruck mittels einer Einschraubdüse eingebracht wird, nachdem der in der Düse vorliegende Ventilkolben mittels der außenliegenden Hülse geöffnet wurde, wird durch die erfindungsgemäße drucklose Einbringung die Struktur des Holzes nicht negativ durch Hochdruckeinwirkung beeinflusst.

Es kann sich bei der Holzbehandlung um eine vorbeugende Behandlung handeln, aber auch um eine Behandlung geschädigter Bereiche, beispielsweise Bereiche mit Fäule, die durch Pilze verursacht wird. Soll eine mit Pilzen befallene Stelle behandelt werden, so ist es möglich, einen Antagonisten einzusetzen. Das bedeutet, dass ein anderer Holzpilz eingesetzt wird, der das Holz nicht schädigt, aber so dominant ist, dass er den schädlichen Pilz verdrängt. Dieser Antagonist breitet sich wie der schädliche Pilz im Holz aus, dabei vergehen nicht nur Tage, sondern Wochen und Monate. Wichtig ist dabei nur, dass der Antagonist sich schneller als der schädliche Pilz ausbreitet, damit der schädliche Pilz verdrängt wird, bevor die Schädigung des Holzes zu groß wird. Der Holzbehandlungswirkstoff entfaltet somit, beispielsweise wenn er einen Antagonisten enthält, seine Wirkung über längere Zeit - so meint daher auch "Langzeit-Behandlung" auch die längere Zeit, die es benötigt, damit eine Pilzkolonie wie die eines Antagonisten gegen einen Schadpilz aufwachsen kann. "Langzeit" ist damit ein relativer Begriff, der zumindest mehrere Tage, je nach Umgebungsbedingungen wie Witterung, Schadpilzbefall, Verteilung des Schadpilzes/Ausbreitung etc. durchaus mehrere Wochen oder Monate bedeuten kann.

Eine Vielzahl weiterer Anwendungen ist möglich - es muss nicht zwingend eine Pilzbehandlung sein, auch die Behandlung anderer Baumkrankheiten oder Befall des Baums oder Holzes, etwa durch Käfer, die durch das Einbringen einer Holzbehandlungssubstanz vertrieben werden, ist denkbar.

"Im Holz verbleiben" der Vorrichtung bezieht sich also darauf, dass diese durchaus über Wochen und Monate oder gar dauerhaft am Ort der Behandlung im Holz bleiben kann.

Dieser Antagonist, oder ein anderes Holzbehandlungsmittel, wird von einem Trägermaterial aufgenommen. Dabei kann das Trägermaterial ein Feststoff sein und den Wirkstoff absorbieren oder auch in flüssigem Zustand vorliegen, wobei der Wirkstoff in dieses Liquid eingetragen ist. Das Trägermaterial wird in den Aufnahmeraum des zylindrischen Hohlkörpers gegeben und mit der Hülse verschlossen.

In der Holzbearbeitungsvorrichtung liegt der Aufnahmeraum bereits mit Trägermaterial und Holzbehandlungswirkstoff befüllt vor, so dass die Holzbearbeitungsvorrichtung direkt zur Anwendung eingesetzt werden kann. Denkbar sind Holzbehandlungsvorrichtungen, die für unterschiedliche Anwendungen, vorbeugend oder gegen einen Befall, eingesetzt werden können, die mit unterschiedlichen Wirkstoffen versehen sind. Dabei sind sehr spezielle Wirkstoffe genauso wie breitflächig einsetzbare Wirkstoffe, biologische oder chemische Produkte und Trägermaterialien möglich.

In einer Ausführungsform der Holzbehandlungsvorrichtung weist die Hülse ein elastisches Material, beispielsweise aus der Gruppe der Materialien, die Silikon, Kunststoff und Gummi umfasst, auf. Die Hülse ist verschiebbar oder hinsichtlich ihrer Länge komprimierbar um den zylindrischen Hohlkörper angeordnet. Beim Übergang in den Anwendungszustand, dem Einschieben oder Einschlagen, gegebenenfalls Eindrücken der Holzbehandlungsvorrichtung in das Holz, wird die Hülse vom umliegenden Holz zurückgehalten, so dass die Hülse entlang des zylindrischen Hohlkörpers verschoben oder zusammengeschoben wird. Dabei wird/werden vom Innenende des zylindrischen Hohlkörpers her die Aufnahmeöffnung(en) freigegeben.

Sind mehrere Austrittsöffnungen an der Mantelfläche des zylindrischen Hohlkörpers vorgesehen, können diese regelmäßig oder unregelmäßig über die Mantelfläche verteilt angeordnet sein. Die Form der Austrittsöffnung(en) kann rund oder länglich sein. So können die auf der Mantelfläche liegenden Austrittsöffnungen des zylindrischen Hohlkörpers verschiedene Formen aufweisen. Es können beispielsweise in den zylindrischen Hohlkörpergebohrte Löcher oder Langlöcher, aber auch Schlitze in Längs- oder Querrichtung sein. Denkbar sind auch schraubenförmig entlang der Mantelfläche gewundene Schlitze oder polygonale Ausschnitte. Die Anzahl und Anordnung dieser Austrittsöffnungen kann unterschiedlich gewählt sein. So sind beispielsweise eine oder mehrere Reihen von Austrittsöffnungen, aber auch zufällig und/oder ungleich verteilte Austrittsöffnungen möglich.

Der Aufnahmeraum kann vorteilhaft durch zumindest eine Wandung in Kammern unterteilt sein. Jede der Kammern weist zumindest eine der Austrittsöffnungen auf. Die Wandung kann dabei den Aufnahmeraum in mehrere in axialer Richtung hintereinander angeordnete Kammern unterteilen. Sie kann jedoch auch selbst in axialer Richtung verlaufen und damit den Aufnahmeraum in mehrere rundum verteilte Kammern aufteilen. So ist es möglich, den zylindrischen Hohlkörper bspw. über einen längeren Zeitraum stückweise in das Holz einzutreiben und dabei immer weitere Kammern zu öffnen. Je nach Ausführungsform der Vorrichtung können über die Dauer der Behandlung zunehmend Kammern "zugeschaltet" werden, indem die entsprechenden Austrittsöffnungen, die der jeweiligen Kammer zugeordnet sind, frei gegeben bzw. geöffnet werden. Durch das längerzeitige Verbleiben der Vorrichtung im Holz kann so eine Behandlung über längere Zeiträume, die Tage, Wochen oder aber auch Monate betragen kann, durchgeführt werden.

Sowohl in dieser Ausführungsform mit einem in mehrere Kammern unterteilten Aufnahmeraum als auch in der einfachsten Ausführungsform mit einem einzigen ungeteilten Aufnahmeraum wird dieser mit dem Trägermaterial mit Holzbehandlungswirkstoff befüllt, bevor die Vorrichtung in das Holz eingetrieben wird. Ein umständliches Ein- oder Nachfüllen vor Ort kann dadurch vorteilhaft entfallen.

Der zylindrische Hohlkörper weist an seinem Außenende einen Kopf auf. Dieser Kopf kann ein abgeflachter Einschlagkopf sein, so dass die Holzbearbeitungsvorrichtung beispielsweise mit einem Hammer in das Holz eingetrieben werden kann. Dies ist bei massivem Holz vorteilhaft, da sonst der zylindrische Hohlkörper durch das Aufschlagen mit dem Hammer verformt werden kann. Der Kopf kann jedoch auch als eine Art Griff ausgebildet sein, der ein Greifen der Holzbehandlungsvorrichtung mit den Fingern ermöglicht. So sind knaufartige oder kugelförmige Griffe möglich.

Der Kopf der Holzbehandlungsvorrichtung kann ferner abnehmbar sein, so dass das Trägermaterial einfach vom Außenende des zylindrischen Hohlkörpers in den Aufnahmeraum eingefüllt werden kann, bevor der Kopf aufgesetzt wird. Es ist damit auch möglich, dass die Holzbearbeitungsvorrichtung durch Abnehmen des Kopfes erneut befüllt wird, wobei dies innerhalb des Holzes vorgenommen werden kann oder die Holzbehandlungsvorrichtung dazu aus dem Holz entnommen werden kann.

Der Kopf zum wieder Befüllen kann ferner als speziell ausgebildeter Kopf mit Öffnung beschaffen sein.

Am Innenende kann der zylindrische Hohlkörper eine Einschlagspitze aufweisen, die das Einschlagen oder Einschieben der Holzbearbeitungsvorrichtung erleichtert, indem sie das Verdrängen des Holzes beim Einbringen des zylindrischen Hohlkörpers erleichtert.

Die Holzbehandlungsvorrichtung kann aus unterschiedlichen Materialien hergestellt werden. In einer Ausführungsform besteht ein Abschnitt des zylindrischen Hohlkörpers, der zwischen dem Kopf und der Einschlagspitze liegt, aus Aluminium und zumindest einer der Abschnitte Einschlagspitze und Kopf aus Messing oder Stahl. Es sind aber auch andere, vorteilhaft härtere Materialien möglich, mit denen eine höhere Festigkeit beim Einschlagen in massives Holz erreicht wird. Für die Holzbehandlung von lebendem Holz an Baumstämmen oder Ästen können alle Abschnitte aus Edelstahl hergestellt werden, so dass eine Korrosion oder ein Übergang von Bestandteilen in das Holz ausgeschlossen werden kann. Wenn bei Vorliegen eines Loches, in das die Holzbehandlungsvorrichtung aufgenommen werden soll, die Härte nicht entscheidend ist, so sind auch Varianten aus Holz oder Kunststoff denkbar.

Die Holzbehandlungsvorrichtung ist in einer Ausführungsform derart ausgebildet, dass sie das Loch, in das sie zur Holzbehandlung eingesteckt wurde oder das durch das Einschlagen entstanden ist, wasserundurchlässig verschließt. Insbesondere kann der Kopf der Holzbehandlungsvorrichtung derart ausgebildet sein, dass das Loch im Holz, in dem der zylindrische Hohlkörper in dem Anwendungszustand der Holzbehandlungsvorrichtung steckt, durch den Kopf wasserundurchlässig verschlossen werden kann. Durch das dauerhafte Verbleiben der Holzbehandlungsvorrichtung im Holz, wodurch die Bohrung, die durch die Einbringung der Holzbehandlungsvorrichtung im Holz geschaffen wurde, verschlossen wird, kann das Eindringen weiterer Feuchtigkeit, die das Ausbreiten von Fäule begünstigt, oder anderer Schadorganismen verhindert werden.

Die Holzbehandlungsvorrichtung kann an der Außenseite der Mantelfläche des zylindrischen Hohlkörpers auch Verankerungen aufweisen, die die Holzbehandlungsvorrichtung im Anwendungszustand im Holz festhalten. Diese Verankerungen sind am Innenende des zylindrischen Hohlkörpers angeordnet, an dem keine Austrittsöffnungen vorliegen, so dass auch die Hülse nicht an diesem Bereich des zylindrischen Hohlkörpers liegt. Ein Verschieben der Hülse zum Außenende hin ist dadurch weiterhin möglich. Die Verankerungen können widerhakenartig ausgebildet sein, so dass sie ein Einschieben bzw. Einschlagen ins Holz erlauben, nicht jedoch ein Herausziehen bzw. ein Herausrutschen der Holzbehandlungsvorrichtung. Mit den Verankerungen bildet der zylindrische Hohlkörper eine Art Dübel, der in einem Loch verankert wird.

Ein erfindungsgemäßes Verfahren zur Behandlung von Holz erfolgt unter Einsatz einer erfindungsgemäßen Holzbehandlungsvorrichtung. Das Verfahren umfasst nach einer ersten Ausführungsform folgende Schritte:
a) Bereitstellen des zylindrischen Hohlkörpers und der Hülse der Holzbehandlungsvorrichtung,
b) Einbringen des Trägermaterials mit dem Holzbehandlungswirkstoff in den Aufnahmeraum des zylindrischen Hohlkörpers der Holzbehandlungsvorrichtung und Verschließen der zumindest einen Austrittsöffnung in der Mantelfläche des zylindrischen Hohlkörpers durch anliegend Anordnen der Hülse um den zylindrischen Hohlkörper,
c) Eintreiben der Holzbehandlungsvorrichtung in das Holz, dabei Verschieben oder Komprimieren der Hülse entlang des zylindrischen Hohlkörpers zum Außenende hin, und dabei Freigeben zumindest einer Austrittsöffnung vom Innenende her, wobei die zumindest eine freigegebene Austrittsöffnung in oder nahe an zu behandelnden Stellen des Holzes zu liegen kommt, und in Kontaktbringen des Aufnahmeraums mit dem Holz, wobei zwischen Holz und Aufnahmeraum in dem Hohlkörper über die zumindest eine Austrittsöffnung eine offene Verbindung entsteht. Dabei wird die Holzbehandlungsvorrichtung im Holz verbleiben gelassen, sodass dabei das Auslassen des Holzbehandlungswirkstoffs über die zumindest eine Austrittsöffnung in das Holz ohne Aufbringung von Druck durch Effekte wie Kapillarwirkung und/oder Diffusion erfolgt.

Die Holzbehandlungsvorrichtung wird an das Holz angesetzt und eingebracht, dabei trennen sich Hülse und zylindrischer Hohlkörper, oder zumindest schiebt sich die Hülse Richtung Kopf. Der zylindrische Hohlkörper wird in das Holz getrieben und verbleibt dort. Dadurch dass die Hülse entfernt bzw. zurückgeschoben wird, liegen die Austrittsöffnungen frei an dem Holz an und der Holzbehandlungswirkstoff kann über die Austrittsöffnungen von dem Aufnahmeraum in das Holz ausgelassen werden.

Nach einer Weiterbildung des erfindungsgemäßen Verfahrens erfolgt in Schritt d) nach vollständigem Eintreiben des zylindrischen Hohlkörpers der Holzbehandlungsvorrichtung in das Holz Zurücklassen des zylindrischen Hohlkörpers in dem Holz.

Nach noch einer Weiterbildung des erfindungsgemäßen Verfahrens wird in Schritt c) die Holzbehandlungsvorrichtung in ein im Holz vorhandenes Loch eingetrieben. Dabei kann dieses Loch durch die Entnahme einer Holzprobe, durch eine Bohrwiderstandsmessung oder eine ähnliche Holzprüfung entstanden oder speziell für die Behandlung gebohrt worden sein. Das Loch kann schon längere Zeit in dem Holz sein oder erst kurz vor dem Einbringen der Holzbearbeitungsvorrichtung entstanden sein.

Darüber hinaus können vor Schritt a) folgende Schritte durchgeführt werden:
a') Entnehmen einer Holzprobe des Holzes zur Untersuchung auf Fäulnis,
a") Untersuchung der Holzprobe auf die Fäulnis verursachende Pilzart,
a'") Auswählen geeigneter Holzbehandlungswirkstoffe.

Weiter kann das Verfahren das Einbringen des ausgewählten Holzbehandlungswirkstoffs auf das Trägermaterial beinhalten. Es ist dabei nicht ausschlaggebend, ob die Entnahme und Untersuchung der Holzprobe zeitlich beabstandet von der Holzbehandlung vorgenommen wird oder unmittelbar vorher.

Bei der Holzbehandlung muss die Holzbehandlungsvorrichtung nicht vollständig in das Holz eingeschoben oder eingeschlagen werden. Es ist vielmehr sinnvoll, dass die Holzbehandlungsvorrichtung nur bis zu einer vorbestimmten Tiefe in das Holz eingetrieben wird, so dass die Austrittsöffnungen so platziert sind, dass das Trägermaterial und damit der Holzbehandlungswirkstoff gezielt in und neben der befallenen Stelle bzw. der vorbeugend zu behandelnden Stelle abgegeben wird.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine Seitenansicht des zylindrischen Hohlkörpers einer Holzbehandlungsvorrichtung ohne Hülse,
- **Fig. 2**: einen Längsschnitt durch einen zylindrischen Hohlkörper für die Holzbearbeitungsvorrichtung aus Fig. 1, noch ohne Hülse und ohne Trägermaterial,
- **Fig. 3**: einen Längsschnitt durch eine Holzbearbeitungsvorrichtung,
- **Fig. 4**: einen Längsschnitt durch eine Holzbearbeitungsvorrichtung mit mehreren Kammern,
- **Fig. 5**: eine perspektivische Detailansicht des zylindrischen Hohlkörpers einer Holzbehandlungsvorrichtung,
- **Fig. 6**: eine perspektivische Detailansicht einer Holzbehandlungsvorrichtung, und
- **Fig. 7**: einen Längsschnitt durch ein erfindungsgemäß behandeltes, imprägniertes Holzstück mit Fäulnis mit einem darin verbliebenen zylindrischen Hohlkörper der Holzbehandlungsvorrichtung.

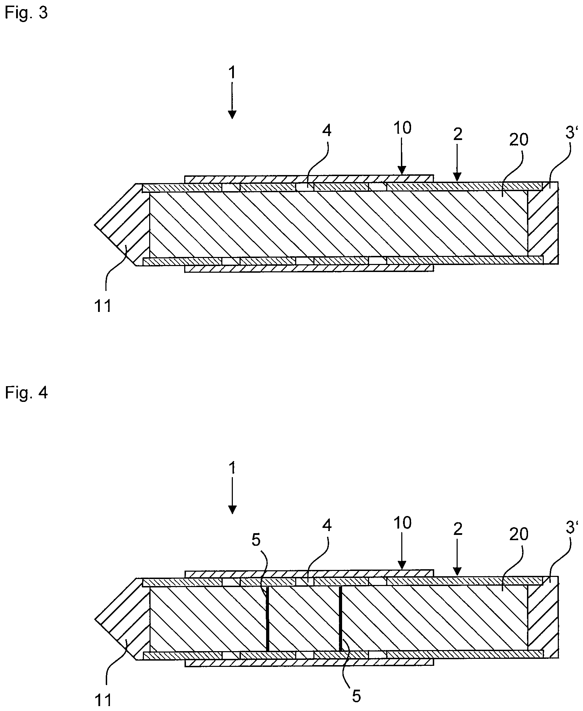

Die erfindungsgemäße Vorrichtung ist eine Holzbehandlungsvorrichtung 1, wie sie in **Fig. 3, 4** **und** **6** gezeigt ist.

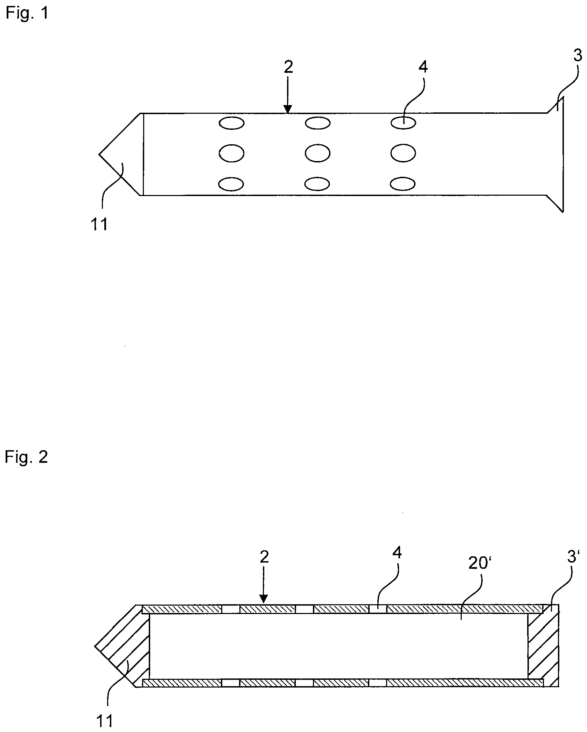

Diese Holzbehandlungsvorrichtung 1 wird aus einem zylindrischen Hohlkörper 2 wie etwa gezeigt in **Fig. 1, 2** und **5** und einer Hülse 10 gebildet. Dabei hat der zylindrische Hohlkörper 2 zumindest einen Aufnahmeraum 20', der Trägermaterial 20 mit einem Holzbehandlungswirkstoff aufnehmen kann. Dabei sind Ausführungsformen möglich, bei denen das Trägermaterial 20 mit dem Holzbehandlungswirkstoff noch in den Aufnahmeraum/die Aufnahmeräume 20' einzubringen ist, aber auch fertig befüllte Holzbehandlungsvorrichtungen 1 für unterschiedliche Anwendungen mit unterschiedlichen Holzbehandlungswirkstoffen, die für die jeweilige Anwendung ausgewählt werden. Der zylindrische Hohlkörper 2 hat ein Innenende, das bei der Anwendung innerhalb des Holzes liegt und ein davon abgewandtes Außenende sowie mehrere Auftrittsöffnungen 4, die hier elliptisch sind. Diese Austrittsöffnungen 4 sind im Nichtanwendungszustand von der Hülse 10 verschlossen und können im Anwendungszustand durch Verschieben oder Komprimieren der Länge der Hülse 10 freigegeben werden. Die Hülse 10 ist über den zylindrischen Hohlkörper 2 gezogen und liegt um diesen an. Dabei kann die Hülse 10 aus einem elastischen Material und durch den zylindrischen Hohlkörper 2 leicht gespannt sein, so dass diese fester auf dem zylindrischen Hohlkörper 2 sitzt und nicht unbeabsichtigt verschoben wird. Die Hülse 2 könnte aber auch aus starrem Material wie Kunststoff, Holz oder Metall bestehen. Dann ist ihr innerer Durchmesser an den Außendurchmesser des zylindrischen Hohlkörpers 2 angepasst, so dass die Innenseite der Hülse 10 dennoch auf der Mantelfläche des zylindrischen Hohlkörpers 2 anliegt und verschiebbar ist.

Nicht figurativ dargestellt ist die Situation während des Einschiebens der Holzbehandlungsvorrichtung in Holz. Hier wird beispielsweise durch die Einschlagspitze ein Loch geformt, oder das Loch liegt alternativ, etwa durch einen Bohrer vorbereitet, schon vor. In das Loch, dessen Innendurchmesser dem Außendurchmesser des zylindrischen Hohlkörpers entspricht, wird dieser in das Holz eingebracht. Die Hülse wird durch das Holz zurückgehalten, da der Außenumfang aus zylindrischem Hohlkörper und Hülse größer ist als das Loch. Die Hülse wird verschoben und gibt die Austrittsöffnungen frei. Dabei werden nach und nach die Austrittsöffnungen, die bereits innerhalb des Holzes liegen, freigegeben. Eine weichere, resp. elastische Hülse kann, anstatt sie zu verschieben auch hinsichtlich ihrer Länge komprimiert werden. Dabei wird das innere Ende der Hülse zum äußeren Ende hin gedrückt und die Hülse wellt sich, so dass sie in Längsrichtung des zylindrischen Hohlkörpers eine kleinere Ausdehnung bekommt.

**Fig. 1** und **2** zeigen den zylindrischen Hohlkörper 2 der Holzbearbeitungsvorrichtung 1 aus **Fig. 3** mit mehreren Austrittsöffnungen 4 auf seiner Mantelfläche, die auf drei Umfangslinien verteilt sind.

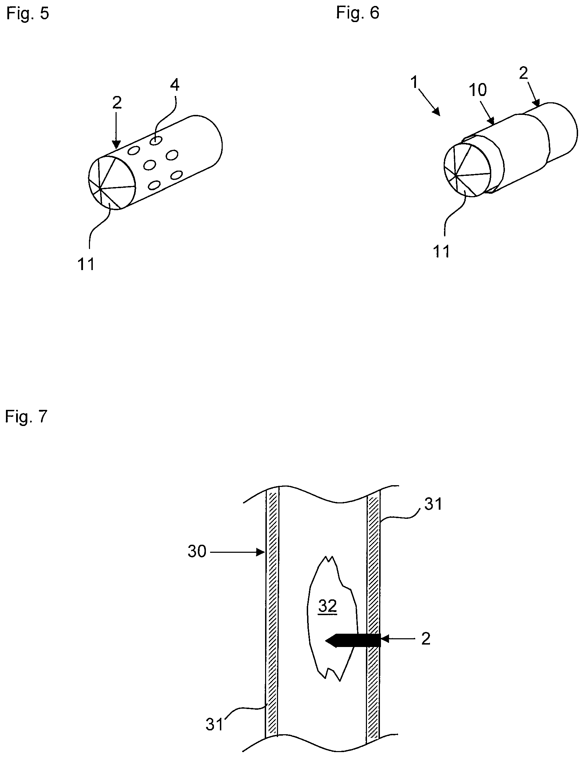

In der **Fig. 5** ist der zylindrische Hohlkörper 2 mit zwei Reihen Austrittsöffnungen 4 dargestellt. **Fig. 6** zeigt die Holzbehandlungsvorrichtung 1 in geschlossenem Nichtanwendungszustand. Hier sind die Austrittsöffnungen 4 auf der Mantelfläche des zylindrischen Hohlkörpers 2 durch die Hülse 10 verschlossen. In **Fig. 5** ist der geöffnete Anwendungszustand dargestellt, wie er innerhalb des Holzes auftritt. Hier sind die Austrittsöffnungen 4 an der Mantelfläche freigegeben, die Hülse 10 ist bereits vollständig abgestreift.

Die Austrittsöffnungen 4 können unterschiedliche Formen aufweisen. In den **Figuren** sind ovale Austrittsöffnungen 4 in der Mantelfläche des zylindrischen Hohlkörpers 2 dargestellt. Diese können jedoch auch runde, polygonale, längliche oder andere Formen aufweisen. So sind auch verschiedene Formen der Austrittsöffnungen 4 des zylindrischen Hohlkörpers 2 möglich. Auch die Anzahl der Austrittsöffnungen 4 kann variieren; so ist es ebenso möglich, dass nur eine einzige Austrittsöffnung 4 vorliegt, wie eine Vielzahl an Austrittsöffnungen 4, die in bestimmten Anordnungen, wie eine oder mehrere Reihen oder spiralförmig, aber auch unregelmäßig verteilt sein können.

**Fig. 4** zeigt eine Holzbehandlungsvorrichtung 1, bei der der zylindrische Hohlkörper 2 im Inneren Wandungen 5 aufweist, die den Aufnahmeraum 20' in mehrere Kammern unterteilt. Dargestellt ist eine Unterteilung in Kammern, die in Längsrichtung des zylindrischen Hohlkörpers 2 hintereinander angeordnet sind.

Nicht dargestellt ist eine Unterteilung durch Wandungen, die in Längsrichtung des zylindrischen Hohlkörpers angeordnet sind. Die Kammern verlaufen dann ebenfalls in Längsrichtung. Auch Wandungen in unterschiedlichen Ausrichtungen und sich überschneidende Wandungen sind denkbar, so dass ein oder wenige große Aufnahmeräume gebildet werden können, die einer oder mehreren Austrittsöffnungen zugeordnet sind oder es werden mehrere Aufnahmeräume gebildet, die jeweils mindestens einer Austrittsöffnung zugeordnet sind.

In **Fig. 2** ist eine Ausführungsform dargestellt, bei der das Außenende des zylindrischen Hohlkörpers 2 einen Kopf 3 aufweist, der als abgeflachter Einschlagkopf 3' ausgebildet ist. Dieser abgeflachte Einschlagkopf 3' bildet die Schlagfläche, wenn die Holzbehandlungsvorrichtung 1 in massives Holz oder ein kleineres Loch eingetrieben werden muss.

Der Kopf 3 kann unterschiedlich gestaltet sein. So kann anstelle des abgeflachten Einschlagkopfes 3' auch ein offenes Ende des zylindrischen Hohlkörpers 2 den Kopf 3 bilden.

Eine ebenfalls nicht dargestellte Ausführungsform weist als Kopf einen Griff auf, mit dem die Holzbearbeitungsvorrichtung 1 zwischen den Fingern gehalten werden kann, so dass diese einfacher in ein Loch im Holz eingebracht werden kann. Dieser Griff kann kugelförmig oder knaufartig ausgeführt oder sogar ergonomisch an die Form der Finger beim Greifen angepasst sein.

In **Fig. 1** ist das Innenende des zylindrischen Hohlkörpers 2 eine Einschlagspitze 11. Die Einschlagspitze 11 erleichtert das Einbringen der Holzbehandlungsvorrichtung 1 in das Holz. So ist es auch möglich, die Holzbehandlungsvorrichtung 1 wie einen Nagel in massives Holz einzuschlagen.

**Fig. 7** zeigt die Anwendung der Holzbehandlungsvorrichtung 1, nachdem die Hülse 10 abgestreift wurde und nur der zylindrische Hohlkörper 2 in dem Stamm 30 verbleibt, der einen imprägnierten Bereich 31 und einen befallenen Bereich 32 zeigt.

Dabei wurde die Holzbehandlungsvorrichtung 1 so in das Holz eingebracht, dass sie den befallenen Bereich 32 erreicht und die Austrittsöffnungen 4 in oder nahe diesem Bereich liegen und sich von dort der Holzbehandlungswirkstoff ausbreiten kann.

Der zylindrische Hohlkörper muss nicht zwingend vollständig in das Holz eingeschlagen werden. Die Einschlagtiefe kann derart gewählt werden, dass die Austrittsöffnungen in der gewünschten Position liegen. Die Holzbearbeitungsvorrichtung kann so ausgestaltet sein, dass sie das Loch, in das sie eingesteckt wurde oder das durch das Eintreiben entstanden ist, wasserundurchlässig verschließt. So kann das Eindringen von Wasser verhindert werden.

Zur Verankerung bzw. Befestigung im Holz kann die Holzbehandlungsvorrichtung Verankerungen aufweisen. Diese sind vorteilhaft an der Außenseite der Mantelfläche des zylindrischen Hohlkörpers angeordnet und halten die Holzbearbeitungsvorrichtung im Holz fest. Diese Verankerungen sind nicht in den Figuren dargestellt.

## Patentansprüche

1. Holzbehandlungsvorrichtung (1), ausgebildet zur Langzeit-Behandlung von Holz, wobei die Holzbehandlungsvorrichtung (1) aus einem zylindrischen Hohlkörper (2) und einer Hülse (10) gebildet ist, wobei
- der zylindrische Hohlkörper (2) ein Innenende, das bei der Anwendung innerhalb des Holzes zu liegen kommt, ein von dem Innenende abgewandtes Außenende, zumindest eine Austrittsöffnung (4) an der Mantelfläche des zylindrischen Hohlkörpers (2) und einen Aufnahmeraum (20') aufweist, in dem ein Trägermaterial (20) mit Holzbehandlungswirkstoff vorliegt,
und wobei
die Hülse (10) um den zylindrischen Hohlkörper (2) anliegend und derart verschiebbar oder zusammenschiebbar angeordnet ist, dass beim Einschieben oder Einschlagen der Holzbehandlungsvorrichtung (1) in das Holz die Hülse (10) entlang des zylindrischen Hohlkörpers (2) zum Außenende hin verschoben oder zusammengeschoben vom umliegenden Holz zurückhaltbar ist, und die zumindest eine Austrittsöffnung (4) des zylindrischen Hohlkörpers (2)
- in einem Nichtanwendungszustand der Holzbehandlungsvorrichtung (1) verschließt und
- in einem Anwendungszustand der Holzbehandlungsvorrichtung (1), in dem die zumindest eine Austrittsöffnung (4) in der Mantelfläche des zylindrischen Hohlkörpers (2) durch die zum Außenende hin verschobene oder zusammengeschobene Hülse (10) vom Innenende her freigegeben in oder nahe an zu behandelnden Stellen des Holzes anordenbar ist, freigibt und den Aufnahmeraum (20') mit dem Holz in Kontakt bringt, wobei zwischen Holz und Aufnahmeraum in dem Hohlkörper (2) über die zumindest eine Austrittsöffnung (4) eine offene Verbindung bereitstellbar ist, so dass der Holzbehandlungswirkstoff über die zumindest eine Austrittsöffnung (4) drucklos durch Effekte wie Kapillarwirkung und/oder Diffusion austreten und in das Holz übergehen kann.

2. Holzbehandlungsvorrichtung (1) nach Anspruch 1,
**dadurch gekennzeichnet, dass**
das Trägermaterial (20)
- ein Absorber ist, in dem der Antagonist absorbiert vorliegt, oder
- ein Liquid ist, in das der Antagonist eingetragen ist, und/oder
- das Trägermaterial (20) mit dem Holzbehandlungswirkstoff ein pulverförmiger oder körniger Feststoff oder ein Fluid, bevorzugt ein Fluid mit einer Viskosität ab 10⁴ mPa s, ist.

3. Holzbehandlungsvorrichtung (1) nach Anspruch 1 oder 2,
**dadurch gekennzeichnet, dass**
die Hülse (10) ein elastisches Material aufweist, bevorzugt aus der Gruppe umfassend Silikon, Kunststoff und Gummi, wobei die Hülse (10) verschiebbar oder hinsichtlich ihrer Länge komprimierbar um den zylindrischen Hohlkörper (2) angeordnet ist.

4. Holzbehandlungsvorrichtung (1) nach zumindest einem der Ansprüche 1 bis 3,
**dadurch gekennzeichnet, dass**
bei Vorliegen mehrerer Austrittsöffnungen (4) diese regelmäßig oder unregelmäßig über die Mantelfläche (4) verteilt angeordnet sind,
und/oder
die zumindest eine Austrittsöffnung (4) rund oder länglich ist.

5. Holzbehandlungsvorrichtung (1) nach zumindest einem der Ansprüche 1 bis 4,
**dadurch gekennzeichnet, dass**
der Aufnahmeraum (20') durch zumindest eine Wandung (5) in Kammern unterteilt ist, wobei jede der Kammern zumindest eine der Austrittsöffnungen (4) aufweist.

6. Holzbehandlungsvorrichtung (1) nach zumindest einem der Ansprüche 1 bis 5,
**dadurch gekennzeichnet, dass**
der zylindrische Hohlkörper (2) am Außenende einen Kopf (3) aufweist, wobei der Kopf (3) ein abgeflachter Einschlagkopf (3') oder ein Griff zum Greifen der Holzbehandlungsvorrichtung, bevorzugt ein knaufartiger Griff ist, und/oder der zylindrische Hohlkörper (2) am Innenende eine Einschlagspitze (11) aufweist,
und/oder
wobei der Kopf (3) derart ausgebildet ist, dass das Loch im Holz, in dem der zylindrische Hohlkörper (2) in dem Anwendungszustand der Holzbehandlungsvorrichtung (1) steckt, durch den Kopf (3) wasserundurchlässig verschließbar ist.

7. Holzbehandlungsvorrichtung (1) nach zumindest einem der Ansprüche 1 bis 6,
**dadurch gekennzeichnet, dass**
ein Abschnitt des zylindrischen Hohlkörpers (2), der zwischen dem Kopf (3) und der Einschlagspitze (11) liegt, aus Aluminium besteht und zumindest einer der Abschnitte Einschlagspitze (11) und Kopf (3) aus Messing oder aus Edelstahl besteht.

8. Holzbehandlungsvorrichtung (1) nach zumindest einem der Ansprüche 1 bis 7,
**dadurch gekennzeichnet, dass**
die Holzbehandlungsvorrichtung (1) an der Mantelfläche des zylindrischen Hohlkörpers (2) außenseitig Verankerungen aufweist, wobei die Verankerungen dazu ausgebildet sind, die Holzbehandlungsvorrichtung (1) im Anwendungszustand im Holz festzuhalten.

9. Verfahren zur Behandlung von Holz unter Verwendung einer Holzbehandlungsvorrichtung (1) nach zumindest einem der Ansprüche 1 bis 8,
**umfassend die Schritte,**
a) Bereitstellen des zylindrischen Hohlkörpers (2) und der Hülse (10) der Holzbehandlungsvorrichtung (1),
b) Einbringen des Trägermaterials (20) mit dem Holzbehandlungswirkstoff in den Aufnahmeraum (20') des zylindrischen Hohlkörpers (2) der Holzbehandlungsvorrichtung (1) und Verschließen der zumindest einen Austrittsöffnung (4) in der Mantelfläche des zylindrischen Hohlkörpers (2) durch anliegend Anordnen der Hülse (10) um den zylindrischen Hohlkörper (2),
c) Eintreiben der Holzbehandlungsvorrichtung (1) in das Holz, dabei Verschieben der Hülse (10) oder Komprimieren der Länge der Hülse (10) entlang des zylindrischen Hohlkörpers (2) zum Außenende hin, und dabei Freigeben zumindest einer Austrittsöffnung (4) vom Innenende her, wobei die zumindest eine freigegebene Austrittsöffnung (4) in oder nahe an zu behandelnden Stellen des Holzes zu liegen kommt, und in Kontakt Bringen des Aufnahmeraums (20') mit dem Holz, wobei zwischen Holz und Aufnahmeraum in dem Hohlkörper (2) über die zumindest eine Austrittsöffnung (4) eine offene Verbindung entsteht, und Verbleiben Lassen der Holzbehandlungsvorrichtung (1) in dem Holz und dabei drucklos durch Effekte wie Kapillarwirkung und/oder Diffusion Auslassen des Holzbehandlungswirkstoffs über die zumindest eine Austrittsöffnung (4) in das Holz.

10. Verfahren nach Anspruch 9,
**umfassend den Schritt,**
d) nach vollständigem Eintreiben der Holzbehandlungsvorrichtung in das Holz Zurücklassen des zylindrischen Hohlkörpers (2) der Holzbehandlungsvorrichtung (1) in dem Holz.

11. Verfahren nach Anspruch 9 oder 10, wobei
in Schritt c) die Holzbehandlungsvorrichtung (1) in ein im Holz vorhandenes Loch eingetrieben wird und/oder
wobei vor Schritt a) folgende Schritte durchgeführt werden:
a') Entnehmen einer Holzprobe des Holzes zur Untersuchung auf Fäulnis,
a") Untersuchung der Holzprobe auf die Fäulnis verursachende Pilzart,
a'") Auswählen geeigneter Holzbehandlungswirkstoffe, und/oder
wobei
Schritt b) das Einbringen des in Schritt a'") ausgewählten Holzbehandlungswirkstoffs beinhaltet, und/oder
wobei in Schritt c) die Holzbehandlungsvorrichtung (1) nur bis zu einer vorbestimmten Tiefe in das Holz eingetrieben wird, so dass die zumindest eine Austrittsöffnung (4) in oder nahe einer zu behandelnden Stelle im Holz angeordnet ist, sodass das Trägermaterial (20) mit dem Holzbehandlungswirkstoff gezielt in und neben einer zu behandelnden Stelle im Holz abgegeben wird.

## Claims

1. Wood-treatment apparatus (1), configured for long-term treatment of wood, wherein the wood-treatment apparatus (1) is comprised of a cylindrical hollow body (2) and a sleeve (10), wherein
- the cylindrical hollow body (2) comprises an inner end that in use is located within the wood, an outer end that is facing away from the inner end, at least one exit opening (4) at the wall surface of the cylindrical hollow body (2), and an accommodating space (20') which accommodates a carrier material (20) with active wood-treatment substance,
and wherein
the sleeve (10) is arranged to contact circumferentially the cylindrical hollow body (2) and so as to be displaceable or compressible that upon the sliding-in or driving-in action of the wood-treatment apparatus (1) into the wood, the sleeve (10) can be retained by the surrounding wood in a manner to be displaced or compressed along the cylindrical hollow body (2) towards the outer end, and causes the at least one exit opening (4) of the cylindrical hollow body (2)
- to be closed off in a state of non-use of the wood-treatment apparatus (1) and
- to be released in a state of use of the wood-treatment apparatus (1) wherein the at least one exit opening (4) in the wall surface of the cylindrical hollow body (2) can be arranged in or near sites of wood to be treated being released from the inner end by the sleeve (10) being displaced or compressed towards the outer end, and brings the accommodating space (20') into contact with the wood, wherein an open connection can be provided between wood and accommodating space in the cylindrical hollow body (2) via the at least one exit opening (4) so that the active wood-treatment substance can exit via the at least one exit opening (4) without pressure by effects such as capillary action and/or diffusion and pass into the wood.

2. Wood-treatment apparatus (1) according to claim 1,
**characterized in that**
the carrier material (20)
- is an absorber in which the antagonist is present in an absorbed state, or
- a liquid into which the antagonist has been incorporated, and/or
- the carrier material (20) with the active wood-treatment substance is a powder-like or granular solid or a fluid, preferably a fluid with a viscosity of or beyond 10⁴ mPa s.

3. Wood-treatment apparatus (1) according to claim 1 or 2,
**characterized in that**
the sleeve (10) comprises an elastic material, preferably from the group comprising silicone, plastic material, and rubber, wherein the sleeve (10) is arranged around the cylindrical hollow body (2) so as to be displaceable or compressibility with respect to its length.

4. Wood-treatment apparatus (1) according to at least one of the claims 1 to 3,
**characterized in that**
in case of the presence of several exit openings (4), the latter are distributed regularly or randomly across the wall surface (4),
and/or
the at least one exit opening (4) is round or elongate.

5. Wood-treatment apparatus (1) according to at least one of the claims 1 to 4,
**characterized in that**
the accommodating space (20') is divided by at least one wall (5) into chambers, wherein each one of the chambers comprises at least one of the exit openings (4).

6. Wood-treatment apparatus (1) according to at least one of the claims 1 to 5,
**characterized in that**
the cylindrical hollow body (2) comprises a head (3) at the outer end wherein the head (3) is a flattened drive-in head (3') or a grip for gripping the wood-treatment apparatus, preferably a knob-shaped grip, and/or
the cylindrical hollow body (2) comprises a drive-in tip (11) at the inner end, and/or
wherein the head (3) is configured such that the hole in the wood, in which the cylindrical hollow body (2) is positioned in the state of use of the wood-treatment apparatus (1), can be closed off water-tightly by the head (3).

7. Wood-treatment apparatus (1) according to at least one of the claims 1 to 6,
**characterized in that**
a section of the cylindrical hollow body (2) that is positioned between the head (3) and the drive-in tip (11) is comprised of aluminium and at least one of the sections drive-in tip (11) and head (3) is comprised of brass or of stainless steel.

8. Wood-treatment apparatus (1) according to at least one of the claims 1 to 7,
**characterized in that**
the wood-treatment apparatus (1) at the wall surface of the cylindrical hollow body (2) comprises anchoring means at the exterior side, wherein the anchoring means are configured to secure the wood-treatment apparatus (1) in the state of use in the wood.

9. Method for the treatment of wood by use of a wood-treatment apparatus (1) according to at least one of the claims 1 to 8,
**comprising the steps**
a) providing the cylindrical hollow body (2) and the sleeve (10) of the wood-treatment apparatus (1),
b) introducing the carrier material (20) with the active wood-treatment substance into the accommodating space (20') of the cylindrical hollow body (2) of the wood-treatment apparatus (1) and closing off the at least one exit opening (4) at the wall surface of the cylindrical hollow body (2) by arranging the sleeve (10) adjacently about the cylindrical hollow body (2),
c) driving the wood-treatment apparatus (1) into the wood, thereby displacing the sleeve (10) or compressing the length of the sleeve (10) along the cylindrical hollow body (2) towards the outer end, and thereby releasing at least one exit opening (4) from the inner end, wherein the at least one released exit opening (4) is positioned in or near sites of wood to be treated, and bringing into contact the accommodating space (20') with the wood, wherein an open connection is formed between the wood and the accommodating space in the hollow body via the at least one exit opening (4), and allowing the wood-treatment apparatus (1) to remain in the wood and thereby releasing the active wood-treatment substance without pressure by effects such as capillary action and/or diffusion via the at least one exit opening (4) into the wood.

10. Method according to claim 9,
**comprising the step,**
d) leaving behind the cylindrical hollow body (2) of the wood-treatment apparatus (1) in the wood after completion of driving in the wood-treatment apparatus into the wood.

11. Method according to claim 9 or 10, wherein
in step c) the wood-treatment apparatus (1) is driven into a hole that is present in the wood and/or
wherein, prior to step a), the following steps are performed:
a') removing a wood sample of the wood for examination with respect to decay,
a") examination of the wood sample with respect to the decay-causing fungus type,
a'") selecting suitable active wood-treatment substances, and/or
wherein
step b) comprises the introduction of the active wood-treatment substance selected in step a'"), and/or
wherein in step c) the wood-treatment apparatus (1) is driven only to a predetermined depth into the wood so that the at least one exit opening (4) is arranged in or near a site in the wood that is to be treated so that the carrier material (20) with the active wood-treatment substance is released in a targeted fashion in and adjacent to a site to be treated in the wood.

## Revendications

1. Dispositif de traitement de bois (1) réalisé pour le traitement à long terme de bois, dans lequel le dispositif de traitement de bois (1) est formé d'un corps creux cylindrique (2) et d'un manchon (10), dans lequel
- le corps creux cylindrique (2) présente une extrémité interne qui vient en appui au sein du bois lors de l'utilisation une extrémité externe détournée de l'extrémité interne, au moins une ouverture de sortie (4) au niveau de la face d'enveloppe du corps creux cylindrique (2) et un espace de réception (20') dans lequel un matériau de support (20) avec une substance active de traitement de bois est présent,
et dans lequel
le manchon (10) est disposé de manière adjacente autour du corps creux cylindrique (2) et de manière à pouvoir être coulissé ou télescopique de telle sorte que lors de l'insertion ou l'enfoncement du dispositif de traitement de bois (1) dans le bois, le manchon (10) peut être retenu par le bois environnant en étant coulissé ou télescopé le long du corps creux cylindrique (2) vers l'extrémité externe, et
- ferme l'au moins une ouverture de sortie (4) du corps creux cylindrique (2) dans un état de non utilisation du dispositif de traitement de bois (1) et
- libère l'au moins une ouverture de sortie (4) du corps creux cylindrique (2) dans un état d'utilisation du dispositif de traitement de bois (1) dans lequel l'au moins une ouverture de sortie (4) dans la face d'enveloppe du corps creux cylindrique (2) peut être disposée par le manchon (10) coulissé ou télescopé vers l'extrémité externe de manière libérée de l'extrémité interne dans ou à proximité de points à traiter du bois, et amène en contact l'espace de réception (20') avec le bois, dans lequel une connexion ouverte peut être mise à disposition entre le bois et l'espace de réception dans le corps creux (2) par le biais de l'au moins une ouverture de sortie (4) de sorte que la substance active de traitement de bois peut sortir et passer dans le bois par le biais de l'au moins une ouverture de sortie (4) sans pression par des effets comme l'action capillaire et/ou la diffusion.

2. Dispositif de traitement de bois (1) selon la revendication 1,
**caractérisé en ce que**
le matériau de support (20)
- est un absorbeur dans lequel l'antagoniste est présent de manière absorbée, ou
- est un liquide dans lequel l'antagoniste est incorporé, et/ou
- le matériau de support (20) avec la substance active de traitement de bois est un solide pulvérulent ou granuleux ou un fluide, de préférence un fluide avec une viscosité à partir de 10⁴ mPa s.

3. Dispositif de traitement de bois (1) selon la revendication 1 ou 2,
**caractérisé en ce que**
le manchon (10) présente un matériau élastique, de préférence parmi le groupe comprenant la silicone, le plastique et le caoutchouc, dans lequel le manchon (10) est disposé de manière à pouvoir être coulissé ou comprimé en ce qui concerne sa longueur autour du corps creux cylindrique (2).

4. Dispositif de traitement de bois (1) selon au moins une des revendications 1 à 3,
**caractérisé en ce que**
en cas de présence de plusieurs ouvertures de sortie (4), celles-ci sont disposées de manière répartie régulièrement ou irrégulièrement sur la face d'enveloppe (4),
et/ou
l'au moins une ouverture de sortie (4) est ronde ou oblongue.

5. Dispositif de traitement de bois (1) selon au moins une des revendications 1 à 4,
**caractérisé en ce que**
l'espace de réception (20') est divisé en chambres par au moins une paroi (5), dans lequel chacune des chambres présente au moins une des ouvertures de sortie (4).

6. Dispositif de traitement de bois (1) selon au moins une des revendications 1 à 5,
**caractérisé en ce que**
le corps creux cylindrique (2) présente une tête (3) à l'extrémité externe, dans lequel la tête (3) est une tête d'enfoncement aplatie (3') ou une poignée pour la saisie du dispositif de traitement de bois, de préférence une poignée de type pommeau, et/ou
le corps creux cylindrique (2) présente une pointe d'enfoncement (11) à l'extrémité interne, et/ou
dans lequel la tête (3) est réalisée de telle sorte que le trou dans le bois dans lequel le corps creux cylindrique (2) s'enfiche dans l'état d'utilisation du dispositif de traitement de bois (1) peut être fermé par la tête (3) de manière imperméable à l'eau.

7. Dispositif de traitement de bois (1) selon au moins une des revendications 1 à 6,
**caractérisé en ce que**
une section du corps creux cylindrique (2) qui se situe entre la tête (3) et la pointe d'enfoncement (11) se compose d'aluminium et au moins une des sections pointe d'enfoncement (11) et tête (3) se compose de laiton ou d'acier inoxydable.

8. Dispositif de traitement de bois (1) selon au moins une des revendications 1 à 7,
**caractérisé en ce que**
le dispositif de traitement de bois (1) présente des ancrages au niveau de la face d'enveloppe du corps creux cylindrique (2) sur le côté externe, dans lequel les ancrages sont réalisés pour fixer dans le bois le dispositif de traitement de bois (1) dans l'état d'utilisation.

9. Procédé de traitement de bois utilisant un dispositif de traitement de bois (1) selon au moins une des revendications 1 à 8,
**comprenant les étapes**
a) mise à disposition du corps creux cylindrique (2) et du manchon (10) du dispositif de traitement de bois (1),
b) introduction du matériau de support (20) avec la substance active de traitement de bois dans l'espace de réception (20') du corps creux cylindrique (2) du dispositif de traitement de bois (1) et fermeture de l'au moins une ouverture de sortie (4) dans la face d'enveloppe du corps creux cylindrique (2) par agencement adjacent du manchon (10) autour du corps creux cylindrique (2),
c) enfoncement du dispositif de traitement de bois (1) dans le bois, coulissement ce faisant du manchon (10) ou compression de la longueur du manchon (10) le long du corps creux cylindrique (2) vers l'extrémité externe, et libération ce faisant d'au moins une ouverture de sortie (4) de l'extrémité interne, dans lequel l'au moins une ouverture de sortie libérée (4) vient en appui dans ou à proximité de points à traiter du bois, et amenée en contact de l'espace de réception (20') avec le bois, dans lequel une connexion ouverte apparaît entre le bois et l'espace de réception dans le corps creux (2) par le biais de l'au moins une ouverture de sortie (4), et actions de laisser le dispositif de traitement de bois (1) rester dans le bois et laisser s'écouler ce faisant la substance active de traitement de bois par le biais de l'au moins une ouverture de sortie (4) dans le bois sans pression par des effets comme l'action capillaire et/ou la diffusion.

10. Procédé selon la revendication 9,
**comprenant l'étape**
d) après enfoncement complet du dispositif de traitement de bois dans le bois, action de laisser le corps creux cylindrique (2) du dispositif de traitement de bois (1) dans le bois.

11. Procédé selon la revendication 9 ou 10, dans lequel
à l'étape c) le dispositif de traitement de bois (1) est enfoncé dans un trou présent dans le bois et/ou
dans lequel les étapes suivantes sont réalisées avant l'étape a) :
a') prélèvement d'un échantillon de bois du bois pour l'examen à la recherche de putréfaction,
a") examen de l'échantillon de bois à la recherche du type de champignon provoquant la putréfaction,
a'") sélection de substances actives de traitement de bois appropriées, et/ou
dans lequel
l'étape b) contient l'introduction de la substance active de traitement de bois sélectionnée à l'étape a"), et/ou
dans lequel à l'étape c), le dispositif de traitement de bois (1) n'est enfoncé dans le bois que jusqu'à une profondeur prédéterminée de sorte que l'au moins une ouverture de sortie (4) est disposée dans ou à proximité d'un point à traiter dans le bois de sorte que le matériau de support (20) avec la substance active de traitement de bois est délivré de manière ciblée dans et à côté d'un point à traiter dans le bois.
